# EUROPEAN PATENT APPLICATION

(11) **EP 3 835 812 A1**
(43) Date of publication of application: **16.06.2021**
(21) Application number: 20198505.8
(22) Date of filing: 25.09.2020
(51) Int. Cl.: G01S 7/41, G01S 13/02, G01S 13/56, G01S 13/44, G01S 13/34, G01S 13/89, G01S 7/295

(54) **METHOD FOR THE LOCALIZATION OF LIVING INDIVIDUALS IN A SEARCH AREA**

(30) Priority: 13.12.2019 CH 16152019
(71) Applicant: Qumea AG, 4500 Solothurn (CH)
(72) Inventor: GYGER, Cyrill, 4500 Solothurn (CH); GERSHONI, Ido, 3672 Oberdiessbach (CH)
(74) Representative: Keller Schneider Patent- und Markenanwälte AG (Bern)

(57) **Abstract**

In a method for the localization of living individuals in a search area, at least two range Doppler maps are obtained from at least two receiving antennas of a wideband radar system (10). Direction of arrival values are obtained from signals received from the at least two receiving antennas. A temporal progression of at least one of the at least two range Doppler maps is analyzed to identify signatures relating to vital signs of an individual to be localized. Finally, positions are assigned to the identified signatures, based on the at least two range Doppler maps and the obtained direction of arrival values.

## Description

### Technical Field

The invention relates to a method and a system for the localization of living individuals in a search area.

### Background Art

Localization and monitoring of living individuals has applications in different fields.

In the aftermath of events in which people are buried, such as avalanches, landslides or the collapse of buildings, quick rescue is crucial. This requires fast localization of the buried individuals that are to be rescued.

Today, three practical methods are available to locate individuals that have been buried by an avalanche: manual probing using dedicated probing rods, specially trained dogs and avalanche transceivers. Finding buried individuals using probing rods is very time-consuming, as the entire avalanche cone has to be passed through and fine-meshed probing has to be carried out, following systematic paths. False-positive discoveries of natural objects (layers of ice, rock, soil, trees,...) can also take up unnecessarily valuable time. The actual success rate of specially trained dogs is rather modest, which is due in particular to the highly insulating snow masses. An avalanche transceiver allows the location of buried subjects by means of radio waves. Both the buried subject and the rescuer/operator must carry an appropriate avalanche transceiver. Avalanche transceivers have some drawbacks. First of all, they require that all buried individuals carry an avalanche beacon. Furthermore, due the characteristics of the signal, the transceiver cannot accurately determine the position of a beacon, which means that a specific search pattern has to be followed in order to find the buried beacons. In order to ensure that the users are able to follow this pattern, they require regular training. Even when the source is localized, the remaining position error is substantial, which means that probing of large areas may be required until the person is finally found, which results in a loss of valuable time and resources. Further, the detection range of the devices is limited which means that the searchers have to move over the avalanche cone, again this requires considerable time. Another drawback is the limited ability of the devices to separate multiple signals. A search in a site with multiple burried victims with an avalanche transceiver is very complex and requires a lot of experience.

Alternatives to avalanche transceivers have been proposed. One of them are passive reflectors, where active search devices send out fixed frequency signals; these are reflected with a doubled frequency by the reflector, employing frequency-doubling diodes. The echoes are received by the search device and the angle and distance are determined. However, similar to avalanche transceivers it is required that the buried individuals carry respective reflectors. Furthermore, search devices will only be available to professional rescue personnel - unlike avalanche transceivers other people who are on the spot are not able to do the search.

Another alternative is described in US 9,442,189 B2 (Fourth Military Medical University Xi'an). It relates to non-contact detection of vital signs using a multichannel UWB-based radar life detector and a 2-dimensional positioning method for multiple human targets. One field of application is the search and rescue of buried people in a disaster. A corresponding detector includes a transmitting antenna and three receiving antennas for forming three radar echo signal channels. A pulsed signal is transmitted, the received echo signals are integrated, filtered and A/D converted; finally, biological information and 2-dimensional position information are obtained. Living individuals may be identified by signals having a certain frequency that corresponds to the breathing rate of a human being.

This system does not require that the buried individuals carry transceivers or reflectors. However, the precision of the localization is still not completely satisfactory.

Another application where living individuals are localized and monitored is the support of caregivers, e. g. in the hospital environment. Especially in the care of confused and delirious patients, close monitoring is indicated, which means that considerable resources are required from the nursing staff. Due to this, it is often not feasible or desirable to closely monitor vulnerable patients personally at all times. However, this entails the risk that critical situations are not recognized in time.

Other approaches are known. As an example, available means for detecting falls and/or leaving the bed include:
- (pressure-sensitive) floor mats,
- (pressure-sensitive) bed mats,
- wearables,
- 2D and 3D camera systems (visible light and/or infrared).

Floor mats are widely used to signaling when a patient stands up. Normally they are attached directly to the luminous call system of a hospital and deliver a binary signal whether the mat is loaded. The floor mat is error-prone because it only covers a limited area and normally cannot distinguish whether the patient, the nursing staff or a visitor steps on it. In addition, to avoid false alarms, it is often unplugged during visits and not replugged again.

Bed mats are normally laid as a band across the bed in the area of the buttocks on the mattress. They also detect by pressure whether a patient is lying in bed or leaving it. More intelligent designs (such as Mobility Monitor of compliant concept, Fehraltorf, Switzerland) have a variety of pressure sensors and can provide further information, such as the frequency of a change of position. They are not suitable for detecting falls.

Wearables are devices that are worn on the body, such as a smart watch. They can use position sensors (acceleration sensors) to detect changes in movement and also falls. Simpler models require the active pressing of an alarm button. Depending on the model, they can also provide additional vital parameters, such as the pulse.

Video surveillance (or audio/video surveillance) is an approach to improve the monitoring, however this is not agreeable with privacy needs of the patients and also requires a correspondingly large number of personnel resources for monitoring. Accordingly, automation of video surveillance systems is aimed at. 2D vision systems (cameras) usually implement classical image processing for event detection. Due to the lack of spatial information, specific differentiation of individual events is difficult. Furthermore, they are susceptible to changes in exposure or work in darkness only on IR basis.

3D vision systems, especially ToF/IR-based systems, offer a solid data basis, because the spatial information is included and the systems also work in the dark.

Nevertheless, as soon as visual information is processed, data protection is an issue.

Finally, another solution for fall detection is offered by nevisQ GmbH, Aachen, Germany: It is a skirting board with integrated IR sensors. This enables a kind of bilateration in the room and detects when someone is lying on the floor. The integration is quite complex and concealment is possible ("blind spots").

### Summary of the invention

It is the object of the invention to create a method for the localization of living individuals in a search area that eliminates or mitigates above mentioned disadvantages of the prior art.

The solution of the invention is specified by the features of claim 1. According to the invention, the method comprising the steps of:
a) obtaining at least two range Doppler maps from at least two receiving antennas of a wideband radar system;
b) obtaining direction of arrival values from signals received from the at least two receiving antennas;
c) analyzing a temporal progression of at least one of the at least two range Doppler maps to identify signatures relating to vital signs of an individual to be localized;
d) assigning positions to the identified signatures, based on the at least two range Doppler maps and the obtained direction of arrival values.

The order of the steps of the method is not fixed. In particular, the order of steps b) and c) may be reversed or both these steps may happen simultaneously. In particular, the steps a)-d) are running in a cycle, which allows for continuously updating the results, thus obtaining up-to-date, at least 2-dimensional localization of all detectable individuals showing vital signs in the search area.

Range Doppler maps relate the distance of targets from a receiving antenna to their relative velocity away from or towards the receiving antenna. Accordingly, signatures relating to vital signs may be identified based on range Doppler data if the underlying physiological process leads to movements of the body of the living individual. Such movements related to vital signs are not only deliberate movements of body parts such as the legs, the arms or the neck but also movements caused by body functions related e. g. to blood circulation (including pulse, heart beat), respiration or digestion. For the present method, movements relating to motion or changes in shape of the body surface are particularly relevant.

A wideband radar system is a radar system having a bandwidth of at least 100 MHz. In a preferred embodiment, the wideband radar system is an ultra-wideband (UWB) radar system. Such systems have a bandwidth exceeding the lesser of 500 MHz or 20% of the arithmetic center frequency.

Preferably, the center frequency of the wideband or ultra-wideband radar system is in the range of 0.5 - 10 GHz.

Wideband or ultra-wideband radar systems as well as center frequencies in the given range allow for high resolution, sufficient penetration into the relevant media (snow, debris, earth, etc.) and sufficient reflection from the body of individuals to be located.

In a preferred embodiment, the wideband radar system is a MIMO (multiple-input multiple-output) radar system, featuring a number of transmitting antennas sending different transmitting signals (in particular orthogonal signals) as well as a number of receiving antennas receiving signals from different transmitting antennas. Signals relating to different transmitting antennas may be extracted from the received signals using matched filters. MIMO radar systems may be built compactly, and they offer improved spatial resolution and Doppler resolution.

In particular, the direction of arrival (DoA) values (alternative term: angle of arrival AoA) may be obtained from the phase difference and/or from the time difference of signals received from different receiving antennas. Knowing the DoA values (with respect to a certain reference point) as well as the distances from the individual antennas the 2- or 3-dimensional position of a target is defined. In principle, the signals from any number of antennas being adapted to receive signals from the search area may be utilized to obtain position information. With respect to stationary or slowly moving objects, multiple signals from the same antenna, taken during a certain time interval, may be utilized.

In order to be able to obtain the direction of arrival, the receiving positions of the at least two receiving antennas are arranged in a certain distance from each other. In particular, the at least two receiving antennas are constituted by at least two physical antennas. Alternatively, the at least two receiving antennas are constituted by a single antenna which is moved between different receiving positions by a suitable mechanism, e. g. a revolving mechanism. Accordingly, a moving receiving antenna constitutes "at least two receiving antennas" in the sense of the present invention.

A temporal progression of a range Doppler map yields information on the variation with time of the velocity of an object. As an example, objects that move back and forth lead to a velocity value that oscillates about 0 with a certain frequency. In order to analyze the temporal progression, the data may be (fast-)Fourier-transformed from time to frequency domain.

In the context of the inventive method, signatures relating to a single type of vital signs or relating to several types of vital signs may be identified, as discussed in more detail below.

Using information from a range Doppler map the identification of vital signs as well as the precise localization of the respective individuals is facilitated.

Correspondingly, an inventive system for the localization of living individuals in a search area comprises:
a) a wideband radar system with at least two receiving antennas; and
b) a processor adapted to
   obtain at least two range Doppler maps from the at least two receiving antennas;
   obtain direction of arrival values from signals received from the at least two receiving antennas;
   analyze at temporal progression of at least one of the at least two range Doppler maps to identify signatures relating to vital signs of an individual to be localized;
   and
   assign positions to the identified signatures, based on the at least two range Doppler maps and the obtained direction of arrival values.

The inventive method may be used for the monitoring of vulnerable persons, in particular in the environment of care centers, such as hospitals, nursing or retirement homes. Accordingly, the search area is an area of stay of vulnerable persons, such as a sickroom or bedroom. The inventive method allows for quickly recognizing critical situations such as patients trying to leave their bed or falling out of bed, restless patients, etc. At the same time the privacy of the persons is respected. Another application is monitoring the sleep activity of the individuals.

Furthermore, the inventive method may be used for localization of living individuals expected to be buried in the search area, in particular of individuals expected to be buried by an avalanche.

For both fields of application, three-dimensional positions are particularly useful. In the first case, three-dimensional positional information facilitates the (automatic or manual) assessment of the situation. In the second case, three-dimensional positional information includes information about the depth of the individual below the surface. This information may be used when planning the rescue of the localized individual (priorities, required equipment and manpower, etc.).

In particular, the assigned positions are evaluated to recognize critical situations. In addition to the positions (which may include information on the posture, i. e. lying, sitting, standing, etc.) corresponding movement information and further information from the Doppler maps may be taken into account, in particular information relating to the vital signs (heartbeat, respiratory patterns, etc.). Preferably, potentially critical situations are automatically recognized and an alert is transmitted immediately to the responsible caregiver in reaction, e. g. to a mobile device of the caregiver. Depending on the monitored area and/or the monitored individuals, different monitoring scenarios may be defined.

For this purpose, information on the position and/or movement of the individuals and/or information on the vital signs may be taken into account.

In a preferred embodiment, an at least two-dimensional range Doppler map is obtained from the at least two range Doppler maps and the obtained direction of arrival values and the analysis to identify signatures and the assignment of positions is based on the at least two-dimensional range Doppler map.

The at least two-dimensional range Doppler map relates the at least two-dimensional position of a target relative to the radar system to its relative movement vector. It includes all the relevant information for the further processing to obtain signatures and positions. However, in principle, the step of generating an at least two-dimensional range Doppler map is not indispensable: The positions may be specifically determined for the identified signatures from the totality of the one-dimensional range Doppler maps.

Preferably, at least three range Doppler maps are obtained from at least three receiving antennas of the wideband radar system, and the at least three ranger Doppler maps are analyzed to identify the signatures and in that a three-dimensional position is assigned to the identified signatures.

Again, a three-dimensional range Doppler map may be obtained from the at least three range Doppler maps and the obtained direction of arrival values and the analysis to identify signatures and the assignment of positions may be based on the three-dimensional range Doppler map. Alternatively, the positions are specifically determined for the identified signatures from the totality of the one-dimensional range Doppler maps.

In a preferred embodiment, the identification of signatures is based on a machine learning method.

The identification of signatures should be able to recognize all living persons in the observed area. An example for a machine learning method includes a neural network. In this case, the neural network may be trained by real-world and/or simulated data representing the movements of individuals localized in a certain area, the movements being (in part) related to vital signs as well as representing movements that are not linked to vital signs. Other machine learning techniques or traditional pattern matching approaches may also be used.

Preferably, the vital signs are heartbeat and/or breathing. They have characteristic properties (e. g. with respect to their frequency and regularity) and thus lead to characteristic signatures in the time progression of range Doppler maps. Furthermore, these vital signs are present even in cases where a person is immobilized (e. g. buried in avalanches, landslides or building collapses).

In a preferred embodiment, signatures for both heartbeat and breathing are identified. Depending on the health condition as well as on the orientation of the individual one or the other signature is more pronounced. Identifying signatures originating from both vital signs thus improves the reliability of the identification of signatures.

Depending on the field of use, movements relating to other and/or additional vital signs may be identified, e. g. deliberate movements of the extremities, the head, facial muscles or other body parts or movements caused by digestive actions.

Preferably, information on properties of the vital signs is assigned to the assigned positions.

Properties of the vital signs in particular relate to amplitudes or frequencies of the detected movements. They also include derived quantities relating to the progression in time or the regularity of the movements.

The information includes e. g. the present heart rate of the individual and/or the breathing rate. It may also include information on the likelihood that the related signature indeed relates to one of the vital signs (see below).

The information may be used to recognize critical situations as mentioned above. Furthermore, it is helpful for the responsible caregiver, allowing to assess the state of health of the individual in real time.

The information is helpful for planning, organizing and monitoring rescue operations. As an example, when resources are limited and several individuals shall be rescued the health condition represented by the properties may be relevant for the determination of which individual to rescue first. Similarly, it may be reasonable to focus first rescue actions to those positions that are related to signatures having a high likelihood of relating to vital signs.

In a preferred embodiment, range micro-Doppler maps are generated for the identification of the signatures relating to the vital signs.

Micro-Doppler maps distinguish between a first motion and a second motion that superimposes the first motion. Usually, the velocity and/or the amplitude and/or the frequency of the first and of the second motion, respectively, are clearly different from each other, which allows for decomposing the superimposed motions.

Using micro-Doppler maps is particularly advantageous if different vital signs shall be identified that lead to superimposed movement, such as heartbeat and breathing that lead both to movements of the chest that may be identified in the range Doppler data.

Furthermore, micro-Doppler maps are beneficial if there are background movements caused e. g. by running water, such as e. g. from a stream running below a snow cover, avalanche cone or landslide or from a drain running below a collapsed building. Corresponding signals may be easily filtered out, such that superimposed movements of individuals may be reliably detected.

In the context of localizing buried individuals, the use of Doppler or micro-Doppler information has particular advantages because buried living individuals are usually at rest but show micro-movements relating to vital signs, in particular movements of the chest caused by breathing and heartbeat. These micro-movements may be reliably captured by Doppler or micro-Doppler measurements.

Range micro-Doppler maps may be obtained at the outset of the inventive method, which means that all subsequent steps are based on these micro-Doppler maps, or they may be generated at a later stage, in particular for the identification of signatures relating to the vital signs.

Range micro-Doppler maps are not always necessary. In particular, in situations where the individuals are immobilized, where no further movement apart from movement related to vital signs is expected and where only one type of movement (e. g. chest movement due to breathing) is taken into account, usual range Doppler maps may be used. Furthermore, in addition or instead of micro-Doppler maps, suitable filtering algorithms may be applied to the radar data to be processed.

Preferably, the step of analyzing the at least two range Doppler maps includes a substep of calculating a value representing a likelihood that an identified signature relates to one of the vital signs and in that a signature is identified only if the value exceeds a threshold value.

The value is a quantity that represents the quality or dependability of the identification of a signature relating to a vital sign. The value may be a value in a continuous or graded, open or closed range or an assignment to a class. Exceeding a threshold value therefore may amount to belonging to a certain class or a certain set of classes.

Preferably, the information on the vital signs includes this value or a quantity derived from this value. This information is helpful in particular for prioritizing further measures, such as rescue actions, especially if the available manpower or equipment is limited.

Absolute positions may be assigned to the identified signatures by combining positions relative to the wideband radar system obtained based on the at least two range Doppler maps and the obtained direction of arrival values with at least one absolute location of a component of the wideband radar system.

The absolute location of the component may be automatically obtained based on a navigational system, such as GPS. Alternatively, it is entered manually. Depending on the layout of the radar system, the dimensionality of the analysis and the orientation of the coordinate axes, it is useful or necessary to not only know the location of the component but also the orientations and/or directions of the relevant components of the radar systems (in particular of the transmit and receive antennas). Such information may be obtained from accelerometers or compasses integrated in the respective components. Again, in principle, they may be determined and entered manually.

It is not required to assign absolute positions. The inventive method and system works with relative positions. These may be displayed relative to e. g. the current position of an element of the wideband radar system and/or a user device.

Advantageously, the method includes the step of displaying a map indicating the assigned positions representing localized living individuals in the search area.

Preferably, the map is updated in real-time. In most applications, a birds-eye view will be appropriate. If three-dimensional location information is available, the depth information relating to identified signatures may be represented e. g. by numerical values. Other ways of indication are available, such as colours chosen from a continuous range of colours or from a fixed set of colours, the colour correlating with the depth of e. g. a buried individual.

The map may be displayed in different modalities, e. g. as a superposition on a topographical map or on a satellite image or in an augmented reality form, where the relevant information (in particular the presumed locations of individuals) is displayed on a real-time image of the region. Other ways of displaying are available. In the simplest case, the relative arrangement of positions is displayed by a corresponding arrangement of markers, a superposition is not mandatory.

Preferably, information on the vital signs is displayed on the map, attributed to the assigned positions.

As mentioned above, the information includes e. g. the present heart rate of the individual and/or the breathing rate. It may also include information on the probability that the related signature indeed relates to one of the vital signs.

In addition to the positions of the localized individuals as well as the information relating to the vital signs, further information may be assigned to the individuals and displayed on the map or on a list. In particular, information on the rescue process may be added, such as information if an individual has already been rescued, if rescue is underway or if support is needed with respect to the rescue of a certain individual.

This allows for displaying a comprehensive overview on the situation and facilitates the planning and organisation of the rescue operation.

In the case of localizing buried individuals, positions of a number of rescue persons are obtained and displayed on the map.

These positions may be determined by personalized devices of the rescue persons, such as smartphones or dedicated rescue devices, including receivers for a navigational system such as GPS. The positions may be sent to a central processor and processed to location information displayable on the map.

Such personalized devices may be used for displaying the map to the involved rescue persons. On this individual map, the present position of the respective rescue person is indicated and/or the display is centered with respect to the present position.

Other ways of determining the positions are available. As an example, the position of the rescue persons is determined by the radar system - similarly to the buried individuals. If a three-dimensional system detects the surface of the burying material (e. g. snow) it may be assumed that all individuals located above this surface are rescue personnel. Advantageously, the obtained positions of the rescue persons are compared with the positions assigned to the identified signatures, in order to identify signatures relating to the rescue persons.

This allows for masking signatures relating to the rescue persons, thus improving the readability of the map, of a list, etc.

In some embodiments of the invention, a map is not used. The position of an individual may be indicated by relative information (e. g. "4 meters at 50°"), which may be continuously updated to assist a user in specifically locating the individual in situ. In principle, this does not require information on an absolute position.

In a particularly preferred embodiment, an inventive method for the localization of living individuals in a search area comprises the following steps:
a) obtaining at least two range Doppler maps from at least two receiving antennas of a wideband radar system, preferably at least three range Doppler maps from at least three receiving antennas of a wideband radar system;
b) obtaining direction of arrival values from signals received from the at least two receiving antennas;
c) analyzing a temporal progression of at least one of the at least two range Doppler maps to identify signatures relating to heartbeat and/or breathing of an individual to be localized, the identification of signatures based on a machine learning technique;
d) combining positions relative to the wideband radar system obtained based on the at least two (or at least three) range Doppler maps and the obtained direction of arrival values with at least one absolute location of a component of the wideband radar system to obtain absolute positions;
e) assigning the absolute positions and information on properties of the vital signs to the identified signatures, based on the at least two (or at least three) range Doppler maps and the obtained direction of arrival values;
f) on an operator device displaying a map indicating the assigned absolute positions representing localized living individuals in the search area and displaying the assigned information on properties of the vital signs.

Other advantageous embodiments and combinations of features come out from the detailed description below and the entirety of the claims.

### Brief description of the drawings

The drawings used to explain the embodiments show:
- Fig. 1: A schematic block diagram of a system according to the invention;
- Fig. 2: a schematic representation of a map view displayed on a user device of the system;
- Fig. 3: a schematic representation of a radar system and its arrangement relative to the search area according to a first embodiment;
- Fig. 4: a schematic representation of a radar system and its arrangement relative to the search area according to a second embodiment;
- Fig. 5A: a first range Doppler map representing a single object approaching the radar system;
- Fig. 5B: a second range Doppler map representing two objects moving away from the radar system with different velocities;
- Fig. 5C: a third range Doppler map representing two objects, one of the moving away from the radar system and the other approaching the radar system; and
- Fig. 6A-D: Doppler signals representing signatures relating to vital signs and further Doppler signals with no clear relation to vital signs.

In the figures, the same components are given the same reference symbols.

### Preferred embodiments

In the following, an embodiment of the invention is described, the described example relating to the search of living individuals buried by an avalanche. The general principles may be applied to other fields of application.

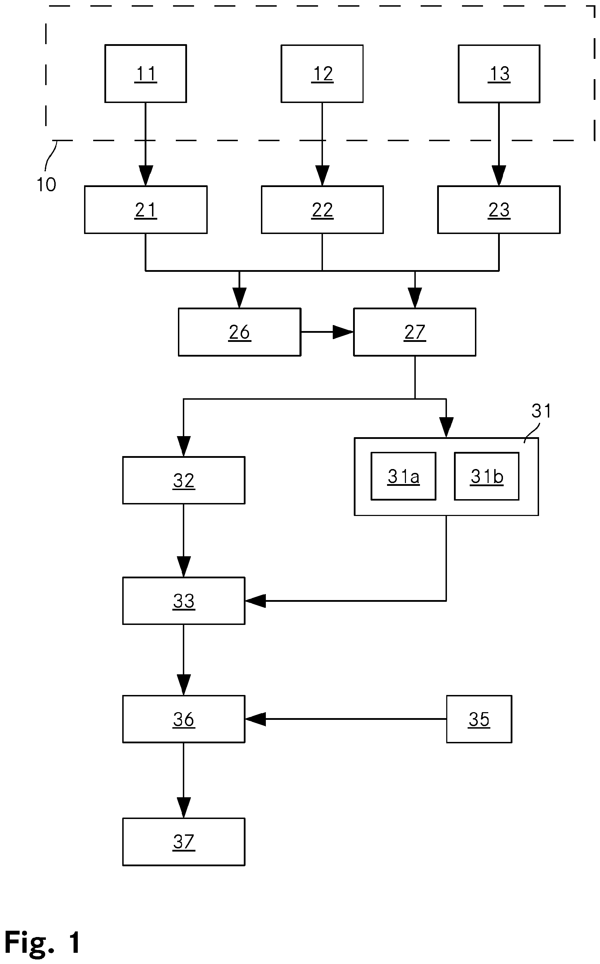

The Figure 1 is a schematic block diagram of a system according to the invention. The system includes a MIMO UWB radar system 10 comprising three transceivers 11, 12, 13. The center frequency of the radar system is between 0.5 and 10 GHz.

The three transceivers 11, 12, 13 provide radar data to 1-dimensional range Doppler modules 21, 22, 23 of a computing system 20. These modules deliver range Doppler data to a computing module 26 for calculating the angles of arrival based on the phase differences between the signals of the three transceivers 11, 12, 13. Furthermore, a 3-dimensional Doppler map is generated by a further computing module 27 based on the range Doppler data as well as on the angles of arrival.

Basically, the range Doppler maps may be generated by the range Doppler modules, based on the raw radar data of several transceivers by the following steps:
1. The radar data is received by the processor from the transceivers. The data is organized in a matrix, where the columns correspond to separate, consecutive chirps. The lines of a given column represent the samples of the given chirp.
2. A symmetric Hamming window matrix is generated, where the window length corresponds to the samples per chirp (number of lines) and the number of chirps (number of columns).
3. For each transceiver, a (1-dimensional) range Doppler map is calculated based on an average of a succession of radar signals (to reduce noise), windowed by the Hamming function, applying a 2-dimensional Fourier transformation and shifting zero Doppler to the middle of the x axis.
4. Now, the phase difference may be obtained from two range Doppler maps M_{RD,1}, M_{RD,2} by calculating M_{RD,1} * M_{RD,2}^{†}. This step may be repeated or generalized to more than two transceivers.
5. From this product or these products, respectively, the angles of arrival may be calculated from the phases of the matrix elements (phase-comparison monopulse).

The range Doppler data is fed to an identification module 31 for the identification of signatures relating to the breathing of a human (submodule 31a) as well as for the identification of signatures relating to the heartbeat of a human (submodule 31b). This step includes the classification of sequences of range Doppler signals relating to detected objects. The sequences cover an interval having a duration that is substantially longer than the expected periodicity of the signals (e. g. at least 5 s for the detection of heartbeat and at least 20 s for the detection of breathing).

The identification may be done by several methods, including machine learning (e. g. deep Neural Network) and/or pattern matching algorithms. The result relates to the probability of recognizing human breathing and/or heartbeat.

The identification may be based on Micro-Doppler data, where effects of a first type of motion (caused by breathing) superimposed to a second type of motion (caused by the heartbeat) are eliminated, such that the motions of the second type are more clearly discernible.

Furthermore, the range Doppler data as well as the angles of arrival are fed to a positioning module 32, setting up a list of locations related to identified objects. Next, the list of locations and the identified signatures are correlated in a correlation module 33 to obtain a list of suspected living individuals containing values for the relative position (xᵣₑₗ, yᵣₑₗ), the depth (z) and information on vital signs obtained from the range Doppler data by the computing module 27.

A GPS module 35 delivers GPS data to a positioning module 36. The latter assigns absolute positions (x, y) to the relative positions (xᵣₑₗ, yᵣₑₗ) obtained from the radar measurements, taking into account the orientation of a component or several components of the radar system, obtained by integrated accelerometers and a compass. This allows for building up a map in a map module 37, indicating the positions of the suspected living individuals in a map showing the surroundings. Similarly, an augmented reality representation is possible, where the locations, marked e. g. by cross hairs, are shown on a live (still or video) image of the scene. In principle, this does not even require the determination of absolute positions, based on navigational data.

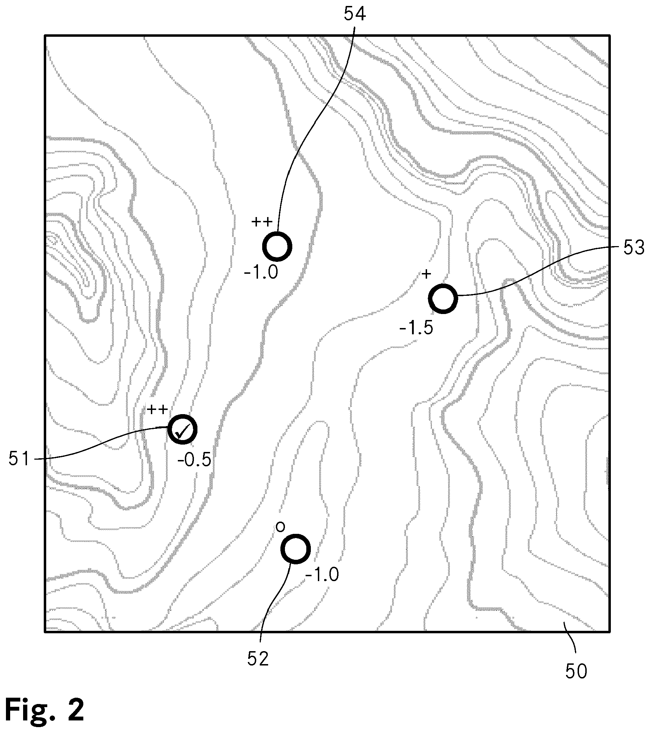

The Figure 2 is a schematic representation of a map view displayed on a user device of the system. The map 50 shows a topographic map in the background as well as a number of markers 51, 52, 53, 54 related to suspected individuals localized by the inventive system. The markers include a white circle indicating the approximate position, an indication for the determined depth below the surface and an indication relating to the reliability of the detection of a living individual. For the four markers in Figure 2, the indications are as follows:

| marker | depth (m) | reliability of the detection |
|---|---|---|
| 51 | 0.5 | ++ (high) |
| 52 | 1.0 | ○ (average) |
| 53 | 1.5 | + (good) |
| 54 | 1.0 | ++ (high) |

One of the markers 51 is marked by a check mark. This has been manually added by the operators to indicate that the individual buried at this position has already been saved.

The information from the map 50 is vital for the rescue team allocating its resources. As an example, if the resources are limited those suspected individuals may be prioritized that need to be rescued from a larger depth, as well as those suspected individuals where the reliability of the detection is best. If sufficient resources are available to rescue several individuals at once, the allocation of resources to the individuals may be based on the map information, e. g. on the estimated burying depth.

In addition to the information given in Figure 2, further information may be displayed, such as e. g. a breathing or heart rate and/or a breathing or heart rate trend for the individuals, allowing a rough estimate of the state of health and/or its progression.

Furthermore, additional status indications are possible (such as "unknown/new", "rescue imminent", "rescue in progress", "rescued"). It is also possible to displayed assigned priorities.

In addition, the locations of rescue personnel may be as well indicated on the map. If the location of the rescue personnel is known to the radar and/or processing modules, signals due to the rescue personnel may be filtered out at an early stage, simplifying processing and improving clarity of the map view. The locations of the rescue personnel may be obtained from GPS positioning of user devices, the positions being transmitted to a central processor. Alternatively, the rescuers carry rescuer beacons sending individual signatures in the frequency range of the radar. The beacons and the radar system precisely synchronize a system time such that the time of flight of the beacon signals to a radar device may be measured. The radar system receives these signals simultaneously with the radar echoes and processes both types of signals in parallel. This allows for precisely localizing the rescue personnel without the use of GPS.

The different sets (layers) of information may be selectively displayed or masked by the operating user.

The map may be used for further purposes. In particular, each of the operators may be navigated step-by-step to a location of a suspected buried individual.

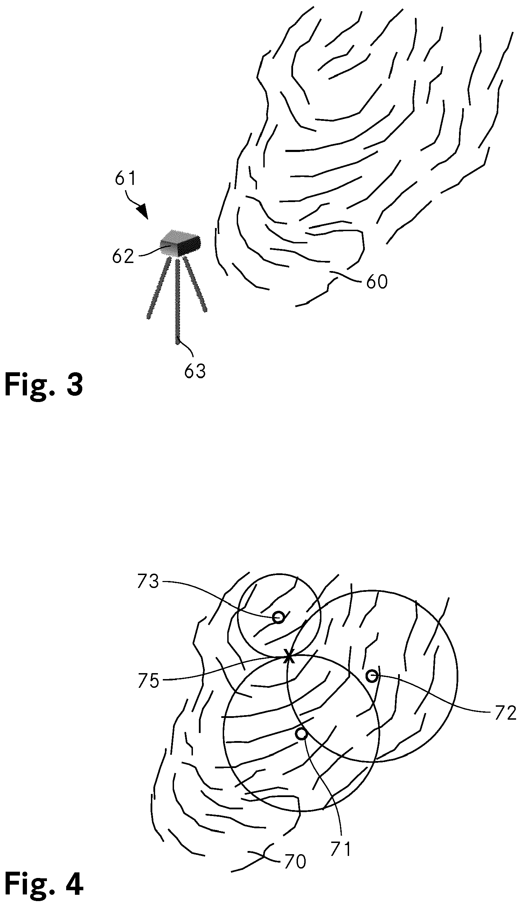

The Figure 3 is a schematic representation of a radar system according to a first embodiment and its arrangement relative to the search area in an avalanche cone 60. A single device 61 including three radar transceivers is located close to the avalanche path where buried people are suspected. The radar device 62 is mounted on a stand 63 and its main acquisition direction points to the search region. In addition to the transceivers, the radar device 62 comprises a power source (battery), acquisition and processing electronics as well as an interface for exporting radar data to further devices. The three transceivers are arranged within a housing of the radar device 62 in a certain distance from each other such that differences with respect to incoming signal phase are caused. In operation, the housing needs to provide a certain linear extension. In order to facilitate transport of the device, several sections of the housing may be arranged in a folding configuration.

The radar device 62 may provide data on different processing levels, i. e. raw radar data, angle data, range Doppler maps and/or even lists of objects with assigned positions and vital sign information. Depending on the level of detail of the processed information, the data is received by a central processing device for further processing and/or user devices for display (with optional upstream processing).

The Figure 4 is a schematic representation of a radar system according to a second embodiment and its arrangement relative to the search area in an avalanche cone 70. Three radar devices 71, 72, 73 are arranged in a distributed manner within the search area in the avalanche path. Their positions are co-referenced using differential GPS, yielding very precise relative positions. The position of a buried individual 75 may be obtained by trilateration, based on the distances obtained from the measurements of the radar devices 71, 72, 73. Each radar device 71, 72, 73 comprises a transceiver, a power source, acquisition and processing electronics as well as an interface for exporting radar data to further devices.

The data is exported to a central processing device, which may be one of the three radar devices 71, 72, 73 or an additional device. There the data from the three devices is combined and processed to finally obtain the list of objects with assigned positions and vital sign information. Instead of or in addition to signal phase differences, time difference of arrival of signals may be employed to determine the angles of arrival and thus the position of the detected objects. This data or data obtained therefrom may be further communicated to user devices of the rescue team.

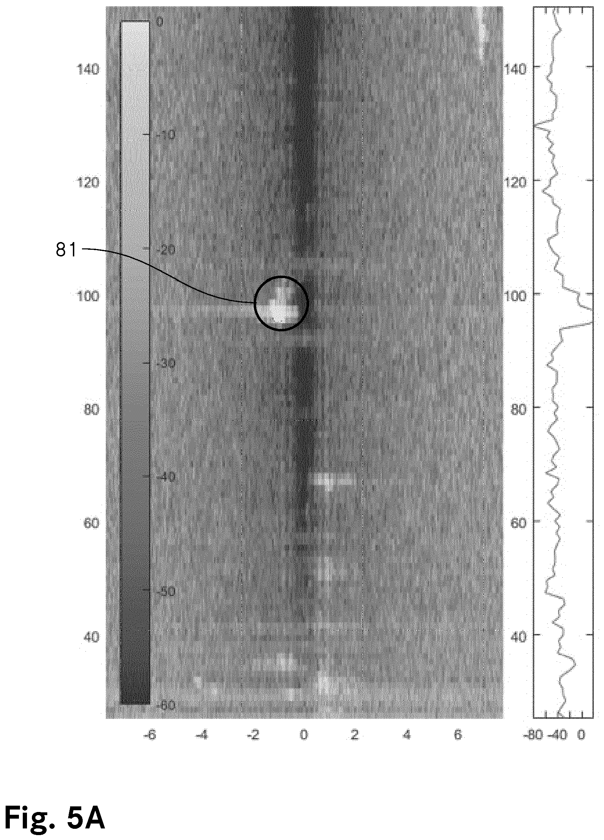

The Figures 5A-C show range Doppler maps relating to different scenes. It is to be noted that these scenes do not correspond to scenes that are typically expected when localizing individuals buried by an avalanche. Rather, these scenes are chosen for illustrative purposes. The horizontal axis relates to velocity (in m/s), determined from the Doppler shift, and the vertical axis relates to distance from a reference point of the radar system (in m). The vertical graph on the right relates to the radar signal strength.

In the context of the described application, living individuals will generate clusters that essentially lie at v=0 and that show a slight oscillation caused by movements of the chest due to breathing and heartbeat.

The Figure 5A is a first range Doppler map representing a single object approaching the radar system. The object is represented in the map by cluster 81. As can be seen from the map, the relative velocity of the object is about -1 m/s, its present distance is slightly less than 100 m.

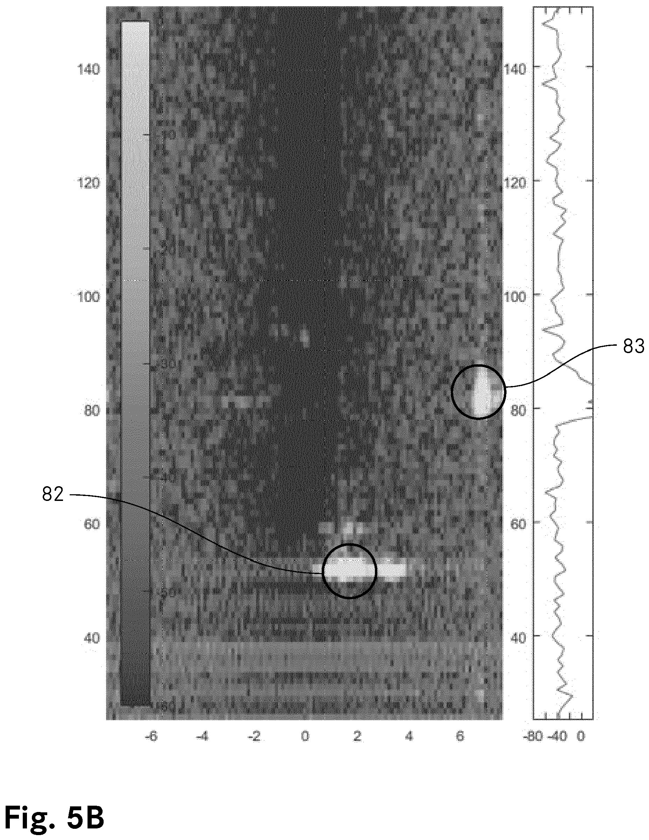

The Figure 5B is a second range Doppler map representing two objects moving away from the radar system with different velocities. The first object is represented in the map by cluster 82. Its relative velocity is about 2 m/s, its distance is about 50 m. The second object is represented by cluster 83. Its relative velocity is about 7 m/s, its distance is slightly more than 80 m.

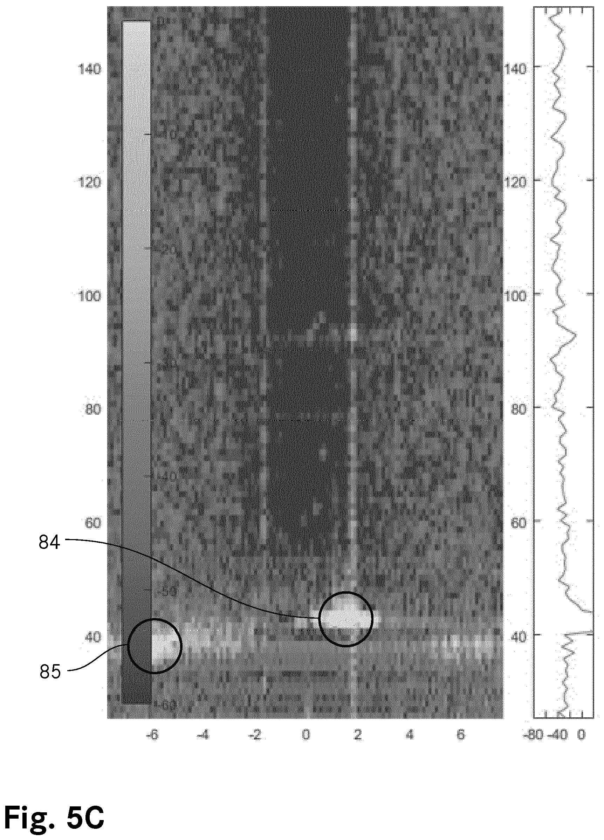

The Figure 5C is a third range Doppler map representing two objects, one of the moving away from the radar system and the other approaching the radar system. The first object is represented in the map by cluster 84. Its relative velocity is about 2 m/s, its distance is about 45 m. The second object is represented by cluster 85. Its relative velocity is about -6 m/s, its distance is slightly less than 40 m.

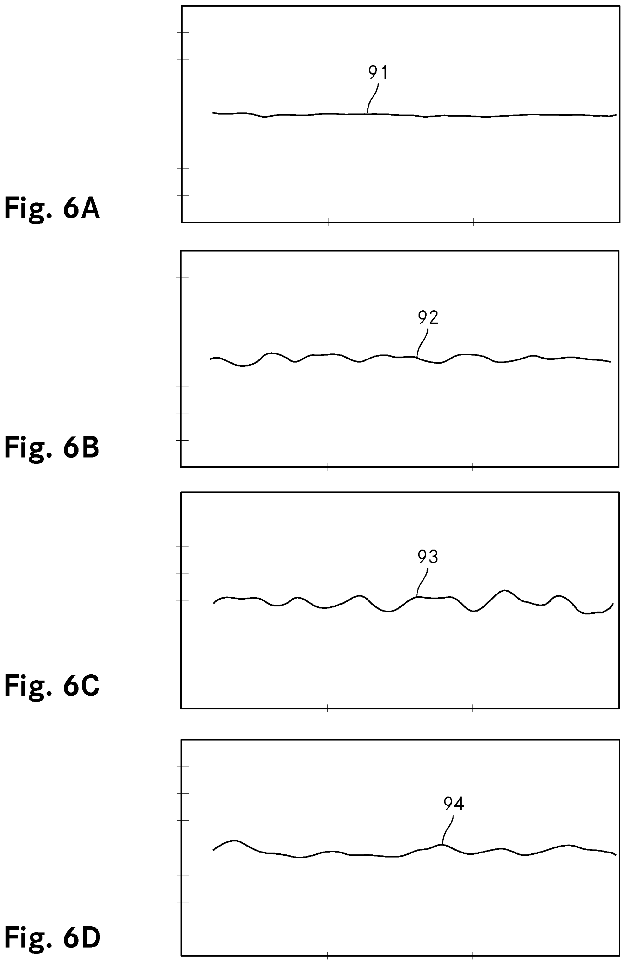

The Figures 6A-D show Doppler signals representing signatures relating to vital signs and further Doppler signals with no clear relation to vital signs. The signals relate to single peaks in the range Doppler map. The horizontal axis is time (representing approximately 20 s), the vertical axis is relative velocity.

The Figure 6A shows a Doppler signal 91 with no discernible velocity. The slight variations are probably due to noise. The signal will be attributed to an inanimate object or to a subject with no discernible vital signs.

The Figure 6B shows a Doppler signal 92 showing characteristic velocity oscillations with a certain approximate frequency (of about 18 Hz). The amplitude of the detected velocity is about 0.02 m/s. The signal will be attributed to a living individual as there is a high possibility that it is caused by a person breathing.

The Figure 6C shows a further Doppler signal 93 showing characteristic velocity oscillations with a certain approximate frequency (of about 20 Hz). The amplitude of the detected velocity is about 0.035 m/s. Again, the signal will be attributed to a living individual.

The Figure 6D shows another Doppler signal 94. There is a velocity variation. However, no clear periodicity is discernible. Accordingly, the signal will be attributed to an inanimate source, e. g. a stream of water running below the snow cover or similar. As a matter of course, the signal will be further monitored as the presently detected velocity profile might be caused by noise or other effects masking a signal coming from a living individual that is only discernible at a later point in time.

The invention is not restricted to the described embodiments. As an example, instead of a MIMO UWB radar system usual phased arrays may be used and/or wideband radars having smaller bandwidths such as about 150 MHz.

The frequency of the radar system may be adjusted to the purpose of the system. As an example, for indoor applications higher frequencies of up to 60 GHz or more may be used as long as the required penetration capacity is achieved.

In three-dimensional systems, more than three receiving antennas may be employed. In two-dimensional systems, two antennas may be sufficient. In principle, there may be a single transmitting antenna or a plurality of transmitting antennas. Furthermore, as mentioned above a plurality of antennas may be replaced by a moving (e. g. rotating) antenna that effectively provides multiple receiving (and/or sending) locations.

In summary, it is to be noted that the invention provides a method for the localization of living individuals in a search area that does not require that the individuals to be localized carry dedicated devices and that allows for high localization precision.

## Claims

1. A method for the localization of living individuals in a search area, comprising the steps of:
a) obtaining at least two range Doppler maps from at least two receiving antennas of a wideband radar system;
b) obtaining direction of arrival values from signals received from the at least two receiving antennas;
c) analyzing a temporal progression of at least one of the at least two range Doppler maps to identify signatures relating to vital signs of an individual to be localized;
d) assigning positions to the identified signatures, based on the at least two range Doppler maps and the obtained direction of arrival values.

2. The method as recited in claim 1, **characterized in that** an at least two-dimensional range Doppler map is obtained from the at least two range Doppler maps and the obtained direction of arrival values and **in that** the analysis to identify signatures and the assignment of positions is based on the at least two-dimensional range Doppler map.

3. The method as recited in claim 1 or 2, **characterized in that** at least three range Doppler maps are obtained from at least three receiving antennas of the wideband radar system, **in that** the at least three ranger Doppler maps are analyzed to identify the signatures and **in that** a three-dimensional position is assigned to the identified signatures.

4. The method as recited in one of claims 1 to 3, **characterized in that** the identification of signatures is based on a machine learning method.

5. The method as recited in one of claims 1 to 4, **characterized in that** the vital signs are heartbeat and/or breathing.

6. The method as recited in one of claims 1 to 5, **characterized in that** information on properties of the vital signs is assigned to the assigned positions.

7. The method as recited in one of claims 1 to 6, **characterized in that** range micro-Doppler maps are generated for the identification of the signatures relating to the vital signs.

8. The method as recited in one of claims 1 to 7, **characterized in that** the step of analyzing the at least two range Doppler maps includes a substep of calculating a value representing a likelihood that an identified signature relates to one of the vital signs and **in that** a signature is identified only if the value exceeds a threshold value.

9. The method as recited in one of claims 1 to 8, **characterized in that** absolute positions are assigned to the identified signatures by combining positions relative to the wideband radar system obtained based on the at least two range Doppler maps and the obtained direction of arrival values with at least one absolute location of a component of the wideband radar system.

10. The method as recited in claim 9, **characterized by** the step of displaying a map indicating the assigned positions representing localized living individuals in the search area.

11. The method as recited in claim 10, **characterized in that** information on the vital signs is displayed on the map, attributed to the assigned positions.

12. The method as recited in one of claims 1 to 11, **characterized in that** the search area is an area of stay of vulnerable persons.

13. The method as recited in claim 12, **characterized in that** the assigned positions are evaluated to recognize critical situations.

14. System for the localization of living individuals in a search area, comprising:
a) a wideband radar system with at least two receiving antennas; and
b) a processor adapted to
obtain at least two range Doppler maps from the at least two receiving antennas;
obtain direction of arrival values from signals received from the at least two receiving antennas;
analyze at temporal progression of at least one of the at least two range Doppler maps to identify signatures relating to vital signs of an individual to be localized; and
assign positions to the identified signatures, based on the at least two range Doppler maps and the obtained direction of arrival values.
